# EUROPÄISCHE PATENTSCHRIFT

(11) **EP 1 078 445 B1**
(45) Veröffentlichungstag und Bekanntmachung des Hinweises auf die Patenterteilung: **11.01.2006**
(21) Anmeldenummer: 99950783.3
(22) Anmeldetag: 27.10.1999
(51) Int. Cl.: H02M 1/12

(54) **WECHSELRICHTER**
INVERTER
ONDULEUR

(30) Priorität: 25.02.1999 DE 19908124
(43) Veröffentlichungstag der Anmeldung: 28.02.2001
(60) Teilanmeldung: 05106885.6
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP1999/008118
(87) Internationale Veröffentlichungsnummer: WO 2000/051225

(56) Entgegenhaltungen:
- EP-A- 0 598 465
- EP-A- 0 758 161
- WO-A-94/18683
- DE-U- 29 506 951
- US-A- 4 677 401
- US-A- 5 499 178
- US-A- 5 513 090
- US-A- 5 661 390
- US-A- 5 831 842

## Beschreibung

Die Erfindung betrifft einen Wechselrichter bzw. ein Ausgangsfilter für Wechselrichter. Der Ausgangsstrom eines Wechselrichters für höhere Leistungen weist in der Regel eine ganze Reihe von Stromoberschwingungen auf. Diese Oberschwingungen sind störend und besonders wenn größere Leistung über Wechselrichter in ein Netz eingespeist werden müssen, treten sie unangenehm auf.

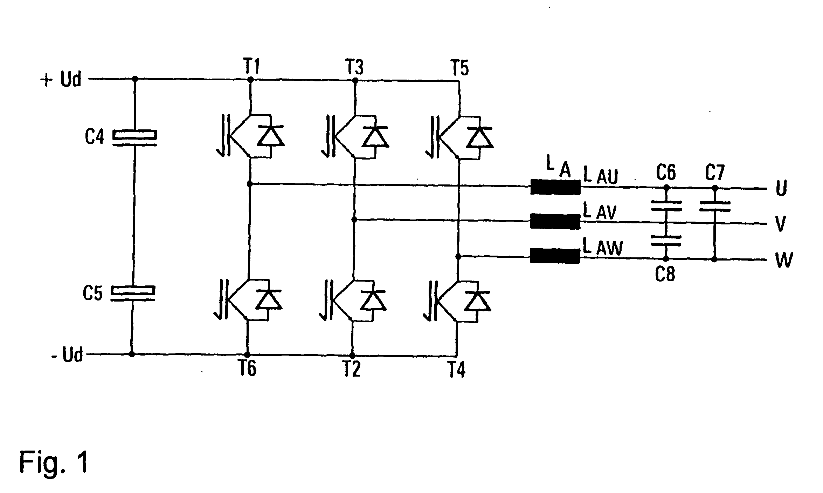

In Figur 1 ist ein Wechselrichter mit einer Ausgangsdrossel und einem Kondensatorfilternetzwerk gezeigt, der den vorbeschriebenen technischen Nachteil von Wechselrichtern deutlich verkleinert und die Stromqualität erheblich verbessert. Die Leistungsschalter T1 bis T6 und die hierzu parallel geschalteten Dioden werden mittels einer Pulsweitenmodulation der Leistungsschalter so geschaltet, dass am Ausgang des Wechselrichters drei sinusförmige Ausgangsströme-Phasen U, V, W entstehen. Die Form des Ausgangsstromes wird durch gezieltes Ein- bzw. Ausschalten der einzelnen Schalter T₁ - T₆ einer Sinusschwingung angenähert. Dabei entstehen jedoch durch die zwangsläufigen Abweichungen vom Sollwert die genannten Oberschwingungen.

Diese erzeugten Oberschwingungen sind im Dreiphasennetz in jedem Augenblick in der Summe gleich null. Dies ist in jedem Fall so, weil keine anderen Stromwege (andere elektrische Kreise) vorhanden sind. Es entstehen dabei nur symmetrische Oberschwingungen. Durch Filterkreise - wie auch in Figur 1 ausgangsseitig dargestellt - wird dann versucht, diese Oberschwingungen zu kompensieren. Da das elektrische Netz durch die induktiven und kapazitiven Beläge (Komponenten der Übertragungsleitung) ebenfalls teilweise für bestimmte Frequenzen sehr niedrige Impedanzen (Widerstände) aufweist, fließen nach wie vor unerwünscht hohe Anteile der Oberschwingungen in das öffentliche Versorgungsnetz.

Ferner ist aus US-A-5,661,390 ein Wechselrichter zur Erzeugung eines Wechsel- oder Drehstromes aus einer Gleichspannung mit einem Gleichspannungszwischenkreis und ausgangsseitig einer Ausgangsdrossel, bestehend aus m + 1 Wicklungen, die magnetisch miteinander gekoppelt sind und magnetische Flüsse, die in der m + ersten Wicklung auftreten, in die m Wicklungen der Ausgangsdrossel fließen, wobei mit dem Wechselrichter ein Wechselstrom (Drehstrom) über m Leitungen ausgegeben wird, wobei die m Leitungen ausgangsseitig durch m Schwingkreise über einen Sternpunkt miteinander gekoppelt sind, mittels dem im Wesentlichen symmetrische Oberschwingungen, die wechselrichterausgangsseitig auftreten, weitestgehend kompensiert werden und über den Sternpunkt unsymmetrische Oberschwingungen, die am Ausgang des Wechselrichters auftreten, über die m + erste Wicklung, welche mit dem Gleichspannungszwischenkreis über Erdanschlüsse und Kapazitäten verbunden ist, teilweise und in Abhängigkeit von des Auslegung des Kapazitäten in den Gleichspannungszwischenkreis zurückgeführt werden, bekannt, mittels dem die EMI-Verträglichkeit verbessert und störende Hochfrequenzen unterdrückt werden.

Es ist daher Aufgabe der Erfindung, die vorgenannten Nachteile zu beseitigen, so dass in das öffentliche Versorgungsnetz nur noch Strom mit sehr kleinen, wenn möglich gar keinen, Oberschwingungen eingespeist wird. Darüber hinaus soll der Gleichspannungszwischenkreis des Wechselrichters im elektrischen Potential (Spannungswert zum Gehäuse, Erde bzw. zum Drehstromsystem) stabilisiert werden.

Zur Lösung der gestellten Aufgabe wird erfindungsgemäß ein Wechselrichter mit den Merkmalen nach Anspruch 1 vorgeschlagen. Vorteilhafte Weiterbildungen sind in den Unteransprüchen beschrieben.

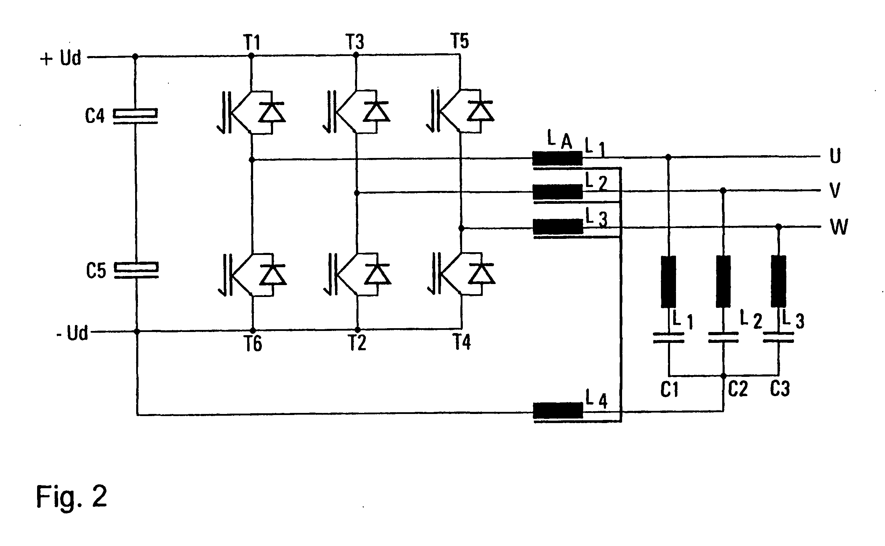

Mit dem Wechselrichter werden unsymmetrische Oberschwingungen, Wechselrichter ausgangsseitig erzeugt und in den Gleichstromzwischenkreis zurückgeführt. Zur Erzeugung der unsymmetrischen Oberschwingungen wird zusätzlich zu der am Wechselrichterausgang vorhandenen Drehstromausgangsdrossel eine weitere Wicklung vorgesehen (vierter Schenkel). Diese weitere Wicklung überträgt unsymmetrische Magnetflüsse, die aus den unsymmetrischen Oberschwingungen entstehen. Die Oberschwingungen werden über drei Schwingkreise, beispielsweise drei LC-Glieder, gesammelt. Symmetrische Oberschwingungen werden, falls überhaupt noch vorhanden, mit diesen Schwingkreisen direkt kompensiert. Die unsymmetrischen Oberschwingungen (Σᵢ ≠ 0) werden zum Gleichspannungszwischenkreis zurückgeführt. Die Summe der unsymmetrischen Oberschwingungen wird am Sternpunkt der Schwingkreise (der Filterkondensatoren der Schwingkreise) abgegriffen und über eine Wicklung am vierten Schenkel in die Minusschiene des Gleichspannungszwischenkreises geführt bzw. eingekoppelt. Damit ergibt sich ein geschlossener "Oberschwingungsstromkreislauf', der in Figur 2 zeichnerisch dar gestellt ist.

Der Summenstrom der unsymmetrischen Oberschwingungen, der am Sternpunkt der Schwingkreise abgegriffen wird, erzeugt im vierten Schenkel der Ausgangsdrossel magnetische Flüsse. Diese magnetischen Flüsse fließen, abhängig von der aktuellen Situation, in die drei Hauptschenkel der Ausgangsdrossel zurück und unterstützen damit die Ausgangsinduktivität. Als Ergebnis stellt sich eine um ca. 5% bis 20% höhere Ausgangsinduktivität als bei einer gewöhnlichen Dreiphasendrossel ein. Da in der vierten Wicklung nur der Oberschwingungsstrom fließt, entstehen hierbei - in Relation zu den Hauptspulen der Drossel - nur sehr kleine Kupferverluste.

Die Erfindung und zweckmäßige Weiterbildungen sowie ihre Vorteile sind in der nachfolgenden Zeichnungsbeschreibung beispielhaft erläutert. Es zeigen:
- Fig. 1: ein Prinzipschaltbild eines bekannten Wechselrichters;
- Fig. 2: ein Prinzipschaltbild eines erfindungsgemäßen Wechselrichters;
- Fig. 3: ein Meßdiagramm eines erfindungsgemäßen Wechselrichters;
- Fig. 4: einen Ausschnitt aus Figur 3 mit vergrößerter Auflösung;
- Fig. 5: ein Meßdiagramm eines erfindungsgemäßen Wechselrichters;
- Fig. 6: ein Meßdiagramm eines erfindungsgemäßen Wechselrichters;
- Fig. 7: ein Schaltbild einer bevorzugten Ausführungsform eines erfindungsgemäßen Wechselrichters;
- Fig. 8: ein Strommeßdiagramm für den Wechselrichter und Netzstrom.

Figur 1 zeigt das Schaltbild eines bekannten Wechselrichters, welcher durch die Antiparallelschaltung der Leistungsschalter T1 bis T6 mit jeweils einer Diode D1-D6 einen Vierquadrantenbetrieb ermöglicht und somit als Schaltung sehr vielseitig einsetzbar ist. Zur Erzeugung der positiven Halbwelle des Ausgangsstroms wird bei dem bekannten Wechselrichter eine aufeinanderfolgende Ein- und Ausschaltung der Schalter Tₙ (n = 1, 3, 5) und Tₙ₊₁ (n = 2, 4, 6) vorgenommen. Für eine Halbwelle des Ausgangsstroms der U-Phase des Drehstroms bedeutet dies, daß mehrmals während einer Halbwelle aufeinanderfolgend T1 und T6 an- bzw. ausgeschaltet werden. Den Leistungsschaltern ist ein Gleichspannungszwischenkreis mit zwei in Reihe geschalteten Elektrolyt-Kondensatoren C4 und C5 zur Einspeisung der Gleichspannung + Ud und - Ud vorgeschaltet. Ausgangsseitig weist der Wechselrichter eine Ausgangsdrossel L_{A} (L_{AU}, L_{AV}, L_{AW}) sowie einen nachgeschalteten Filter, bestehend aus drei Kondensatoren C6, C7, C8, die zwischen den jeweiligen Phasen angeordnet sind, auf. Wie bereits beschrieben, wird die Form des dreiphasigen Ausgangsstroms U, V, W durch ein gezieltes Ein- und Ausschalten der einzelnen Leistungsschalter T1 bis T6 einer Sinusschwingung angenähert. Dabei entstehen jedoch durch die zwangsläufigen Abweichungen vom Sollwert Oberschwingungen. Diese erzeugten Oberschwingungen sind im Dreiphasennetz in jedem Augenblick in ihrer Summe gleich oder nahezu null. Dies ist so, weil keine anderen Stromwege vorhanden sind. Die auftretenden Oberschwingungen sind jedoch stets symmetrisch und durch den Kondensatorfilterkreis wird versucht, diese Oberschwingungen zu kompensieren. Da aber das elektrische Netz durch die induktiven und kapazitiven Beläge (Komponenten der Übertragungsleitung) ebenfalls teilweise für bestimmte Frequenzen sehr niedrige Impedanzen (Widerstände) aufweist, fließen nach wie vor hohe Anteile der Oberschwingungen in das öffentliche Versorgungsnetz, was sehr unerwünscht ist.

Figur 2 zeigt das Schaltbild eines erfindungsgemäßen Wechselrichters. Dieser weist wie der bekannte Wechselrichter einen Gleichspannungszwischenkreis, Leistungsschalter T1 - T6 und hierzu parallel geschaltete Dioden D1 - D6 sowie eine Ausgangsdrossel L_{A} auf.

Der Wechselrichter erzeugt unsymmetrische Oberschwingungen. Hierzu ist eine zusätzliche Wicklung L₄ (zusätzlicher Schenkel) vorgesehen. Dieser vierte Schenkel L₄ überträgt die unsymmetrischen Magnetflüsse, die aus den unsymmetrischen Oberschwingungen entstehen. Die Oberschwingungen werden über drei Schwingkreise LC bzw. drei L-C-Glieder, bestehend aus den Induktivitäten L₁ bis L₃ sowie den Kondensatoren C1 bis C3 und einem gemeinsamen Sternpunkt. Symmetrische Oberschwingungen werden mit diesen Schwingkreisen LC, soweit sie noch vorhanden sind, direkt kompensiert. Unsymmetrische Oberschwingungen L₄ (ΣI ≠ 0) werden über den Sternpunkt der Wicklung des vierten Schenkels L₄ zugeführt. Diese vierte Wicklung L₄ ist mit der Minusschiene des Gleichspannungszwischenkreises verbunden. Die Summe der unsymmetrischen Oberschwingungen wird somit am Sternpunkt der Filterkondensatoren abgegriffen und über die Wicklung am vierten Schenkel L₄ in den Gleichspannungszwischenkreis eingekoppelt. Hiermit ergibt sich ein geschlossener Oberschwingungsstromkreislauf für die unsymmetrischen Oberschwingungen.

Der Summenstrom der unsymmetrischen Oberschwingungen der am Sternpunkt der Kondensatoren abgegriffen wird, erzeugt am vierten Schenkel der Ausgangsdrossel L_{A} magnetische Flüsse. Diese magnetischen Flüsse fließen, L_{A} abhängig von der jeweiligen Situation, in die mit dem vierten Schenkel magnetisch gekoppelten Hauptschenkel der Ausgangsdrossel L_{A} zurück und unterstützen deren Ausgangsinduktivität.

Als Ergebnis hieraus erhält man eine um ca. 5-20% höhere Ausgangsinduktivität L_{A} als bei einer gewöhnlichen Dreiphasendrossel. Da in der vierten Wicklung L_{A4} nur der Oberschwingungsstrom der unsymmetrischen Oberschwingungen fließt, entstehen hierbei nur sehr kleine Kupferverluste, verglichen zu denen in den Hauptspulen L_{A1}, L_{A2}, L_{A3}.

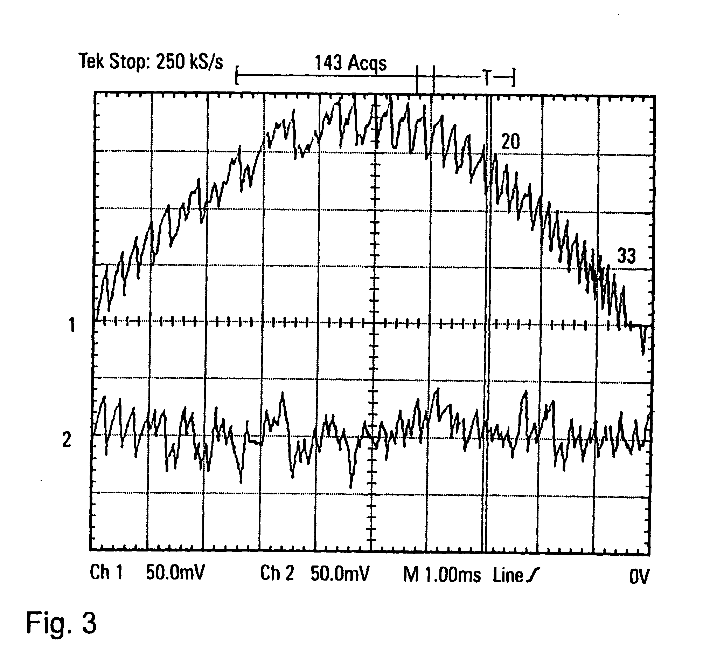

Figur 3 zeigt ein Meßdiagramm des Wechselrichters nach Figur 2. Die obere Kurve zeigt die positive Sinushalbschwingung des Stromes am Wechselrichterausgang. In diesem Fall ist die Hysterese des Stromes konstant und die Schaltfrequenz variabel. Die untere Kurve zeigt die Summe der Oberschwingungen der drei Ausgangsphasen des Wechselrichters, die über den vierten Schenkel in den Gleichspannungszwischenkreis zurückfließen.

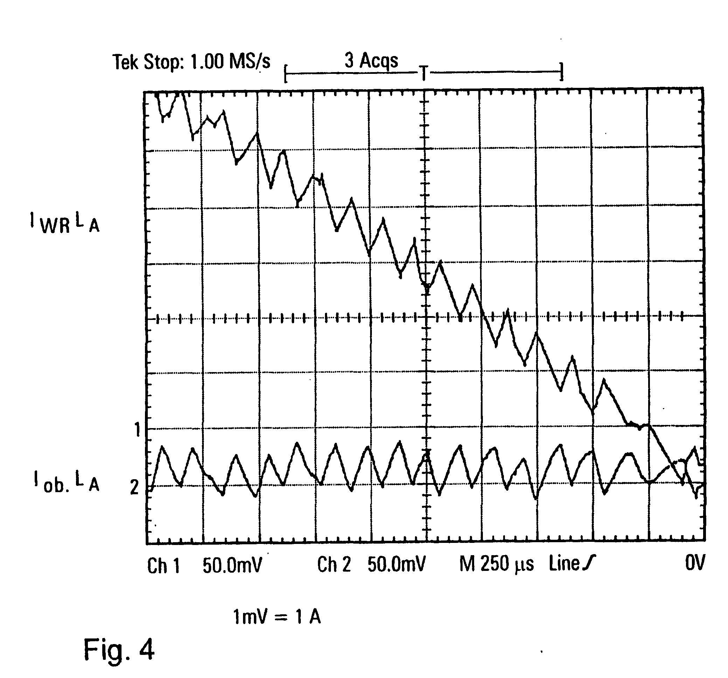

Figur 4 zeigt nochmals einen Teil des Ausgangsstromes des Wechselrichters der Phase 1 in höherer Auflösung. Hierbei sind deutlich die dreieckförmigen Oberschwingungen des Ausgangsstromes I_{WR}L_{A} zu erkennen.

Mit dem Schwingkreis, bestehend aus L₁ und C₁, werden diese Oberschwingungen am Ausgang der Ausgangsinduktivität L_{A} von der (Sinus-) Grundschwingung des Ausgangsstromes getrennt. Die untere Kurve in Figur 4 zeigt den zeitlichen Verlauf des Stromes I_{L1C1} in L₁ und C1.

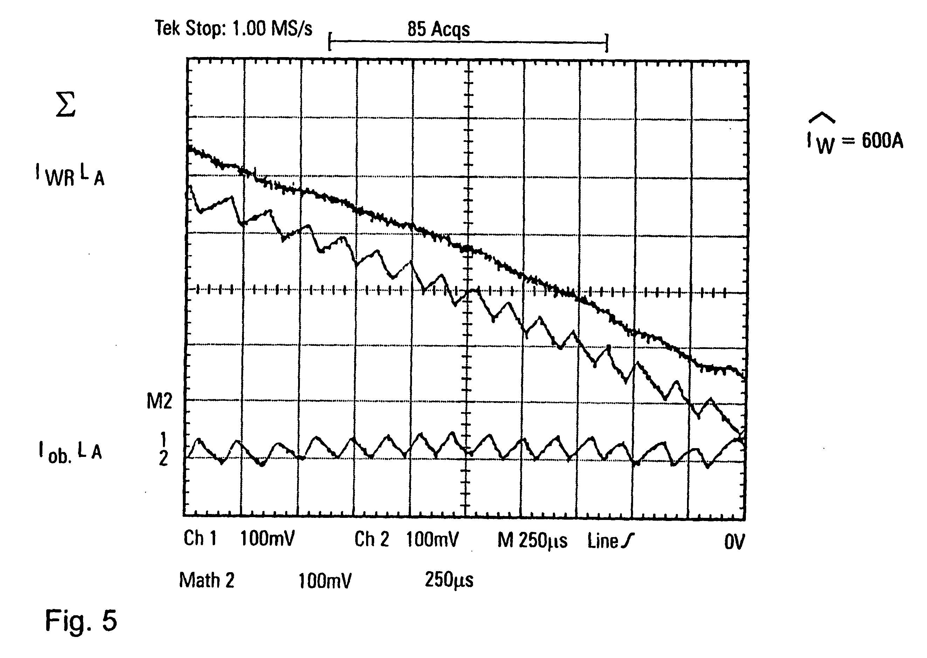

Figur 5 zeigt das Ergebnis der Trennung der Oberschwingungen vom Hauptstrom (Grundschwingung 50 Hz). Die oberste Kurve zeigt den Ausgangsstrom ohne Oberschwingungen. Dieses sehr gute Ergebnis ist nur mit dem erfindungsgemäßen Oberschwingungskreislauf möglich. Dabei werden, wie in den Figuren zu erkennen, die erzeugten Oberschwingungen vom Wechselrichter nahezu zu 100% in den Gleichspannungszwischenkreis zurückgeführt. Die mittlere Kurve in Figur 5 zeigt den Wechselrichterstrom I_{WR}L_{A} und die untere Kurve in Figur 5 zeigt nochmals den da- H zugehörigen Oberschwingungsstrom.

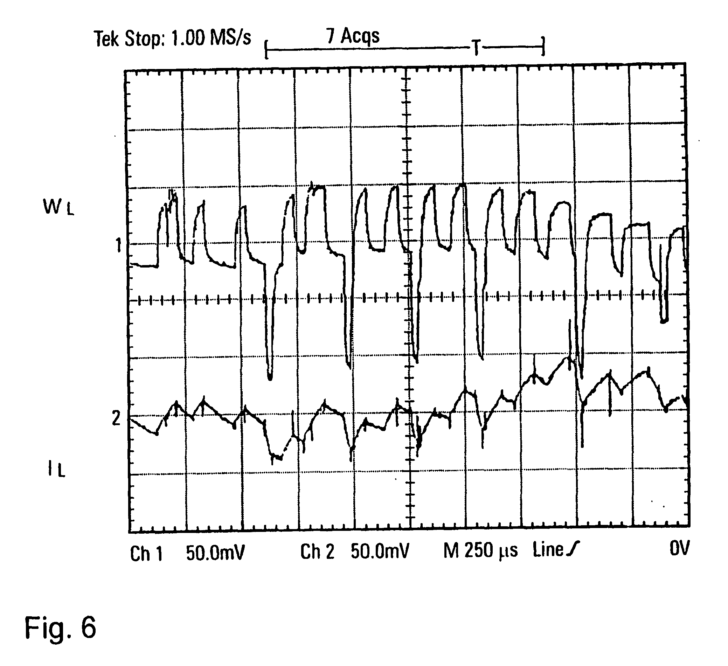

Figur 6 (untere Kurve) zeigt die Summe der drei Oberschwingungsströme I₂₁, I₂₂ und I₂₃. Dieser Strom, der fast alle Oberschwingungen der drei Phasen beinhaltet, wird nun nochmals genutzt, um die Wirkung der Ausgangsdrossel L_{A} zu erhöhen.

Diese Drossel besteht, wie bereits beschrieben, aus den drei Hauptschenkeln L_{A1}, L_{A2}, L_{A3} für die drei Hauptausgangswicklungen und einem vierten kleinen Tochterschenkel, der nur für die Oberschwingungen vorgesehen ist. Dieser vierte Schenkel führt nur die magnetischen Flüsse, die der Summe der Oberschwingungen entsprechen. Die entsprechende Amplitude dieses Summenstromes der Oberschwingungen ist in Figur 6, untere Kurve dargestellt. Die obere Kurve zeigt den entsprechenden Spannungsverlauf hierzu. Um dies zu erreichen, ist ein Eisenquerschnitt von ca. 20% der Hauptschenkel für den vierten Schenkel ausreichend. Der vierte Schenkel erhöht aber die wirkende Ausgangsinduktivität L_{A} um ca. 5-20%. Hieraus resultiert eine kleinere Baugröße der Ausgangsdrossel L_{A} und ein besserer Wirkungsgrad.

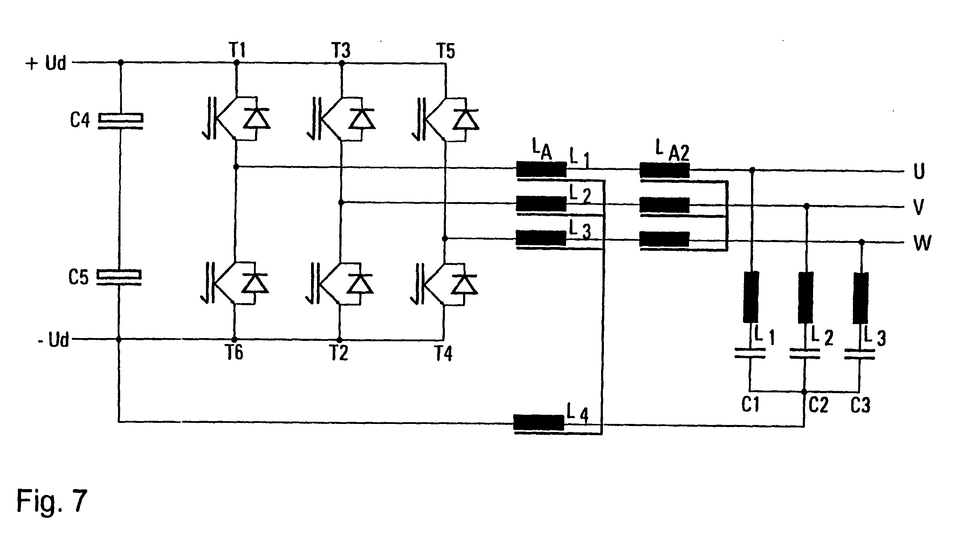

Figur 7 zeigt eine Weiterbildung des Wechselrichters. Die Ausgangsdrossel ist hierbei zweiteilig aufgebaut und besteht aus einer Vierschenkeldrossel und einer hierzu in Reihe geschalteten kompensierten Dreiphasendrossel L_{A2}. Für unsymmetrische Oberschwingungsströme können vorteilhaft stromkompensierte Drosseln eingesetzt werden. Da die Summe des Netzstromes (Dreiphasenstrom) gleich null ist, wird die Drossel nicht mit den sehr hohen Grundschwingungen belastet (vormagnetisiert). Somit kann mit wenig Aufwand eine hohe Induktivität aufgebaut werden.

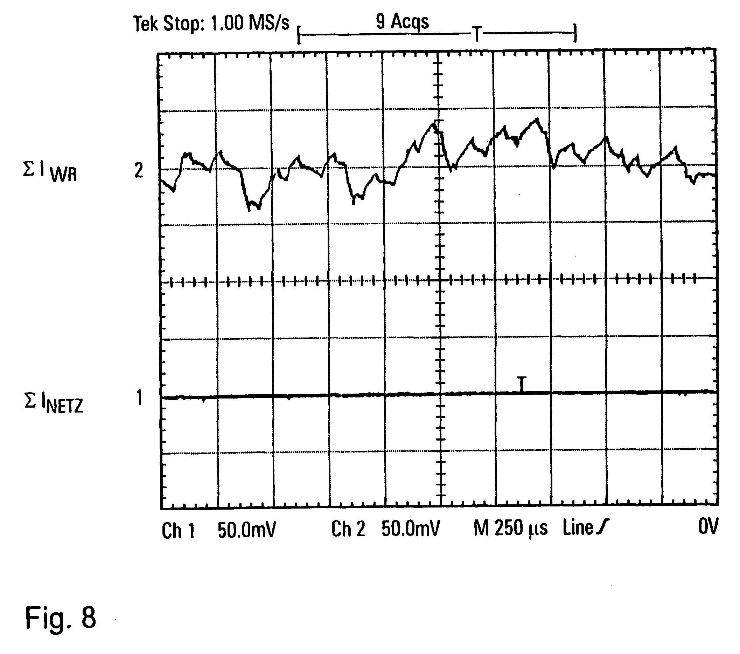

Figur 8, obere Kurve, zeigt die Summe der drei Ausgangsströme am Wechselrichterausgang vor dem Filter. Die maximale Amplitude beträgt hierbei nur 10% des Spitzenwertes eines Phasenstromes. Die untere Kurve zeigt die Summe der Ausgangsströme nach dem Filter. Wie zu sehen, ist dieser Ausgangsstrom von ausgezeichnet hoher Qualität und koppelt keine negativen Oberschwingungen in das Netz ein.

Der Gleichspannungszwischenkreis wird mit dem geschlossenen Oberschwingungskreis auch gleichzeitig stabilisiert. Der Sternpunkt der drei Kondensatoren hat ein ruhendes, im Prinzip das gleiche Potential wie Erde. Da dieser Punkt statisch über die Induktivität mit dem Zwischenkreis verbunden ist, fließt hierüber ein Ausgleichsstrom, wenn das Potential des Zwischenkreises sich ändert. Springende Potentiale sind für Generatoren, die in den Gleichspannungszwischenkreis einspeisen, schädlich, da durch Spannungsänderungen (dU/dt) ein kapazitiver Strom durch die Isolation fließen würde und langfristig Isolationsschäden verursacht.

Bevorzugt wird des Wechselrichter in einem elektrische Energie erzeugenden System, beispielsweise eine Windkraftanlage, eingesetzt. Solche elektrische Energie erzeugende Systeme versorgen dann das Netz mit einem Strom höchster Qualität, was auch zur Folge hat, daß der jeweilige Netzbetreiber weniger Maßnahmen zur Stromqualitätssicherung vornehmen muß.

## Patentansprüche

1. Wechselrichter zur Erzeugung eines Wechsel- oder Drehstromes aus einer Gleichspannung mit einem Gleichspannungszwischenkreis und ausgangsseitig einer Ausgangsdrossel (L_{A}), bestehend aus m + 1 Wicklungen, die magnetisch miteinander gekoppelt sind und magnetische Flüsse, die in der m + ersten Wicklung auftreten, in die m Wicklungen der Ausgangsdrossel fließen, wobei mit dem Wechselrichter ein Wechselstrom (Drehstrom) über m Leitungen in ein öffentliches Stromversorgungsnetz ausgegeben wird, wobei die m Leitungen ausgangsseitig durch m Schwingkreise über einen Sternpunkt miteinander gekoppelt sind, mittels dem im Wesentlichen symmetrische Oberschwingungen, die wechselrichterausgangsseitig auftreten, weitestgehend kompensiert werden und über den Sternpunkt unsymmetrische Oberschwingungen, die am Ausgang des Wechselrichters auftreten, über die m + erste Wicklung (L₄), welche mit dem Gleichspannungszwischenkreis über eine Leitung direkt verbunden ist, in den Gleichspannungszwischenkreis zurückgeführt werden.

2. Wechselrichter nach einem der vorhergehenden Ansprüche, mit Mitteln, die ausgangsseitig unsymmetrische Oberschwingungen erzeugen.

3. Wechselrichter nach Anspruch 2,
bei dem die Ausgangsdrossel unsymmetrische Magnetflüsse, die aus den unsymmetrischen Oberschwingungen entstehen, überträgt.

4. Wechselrichter nach einem der vorhergehenden Ansprüche,
bei dem der m + erste Schenkel nur von Oberschwingungsstrom durchflossen wird.

5. Wechselrichter nach einem der vorhergehenden Ansprüche,
**dadurch gekennzeichnet, dass** die Ausgangsdrossel eine stromkompensierte Drossel ist.

6. Wechselrichter nach einem der vorhergehenden Ansprüche,
bei dem die Ausgangsdrossel aus einer Vierschenkeldrossel und einer in Reihe geschalteten Dreiphasendrossel besteht.

7. Windkraftanlage mit einem Wechselrichter zur Erzeugung eines Wechsel- oder Drehstroms nach einem der vorhergehenden Ansprüche.

## Claims

1. An inverter for producing an alternating or three-phase current from a direct-current voltage with a d.c. voltage intermediate circuit and, on the output side, an output inductor (**L**_{**A**}), comprising **m + 1** windings which are coupled to one another magnetically, and magnetic fluxes which occur in the **m + 1**st winding flow into the **m** windings of the output inductor, wherein an alternating current (three-phase current) is delivered by the inverter by way of **m** lines into a public supply network, wherein the **m** lines are coupled to one another on the output side by **m** oscillating circuits by way of a star point, by means of which substantially symmetrical harmonic oscillations, which occur on the output side of the inverter, are compensated to a very large degree, and asymmetrical harmonic oscillations, which occur at the output of the inverter, are returned by way of the star point into the d.c. voltage intermediate circuit by way of the **m** + **1**st winding (**L**_{**4**}) which is directly connected to the d.c. voltage intermediate circuit by way of a line.

2. An inverter according to any one of the preceding Claims, with means which produce asymmetrical harmonic oscillations on the output side.

3. An inverter according to Claim 2, in which the output inductor transmits asymmetrical magnetic fluxes which are formed from the asymmetrical harmonic oscillations.

4. An inverter according to any one of the preceding Claims, in which the **m + 1**st leg has only harmonic current flowing through it.

5. An inverter according to any one of the preceding Claims, **characterized in that** the output inductor is a current-compensated inductor.

6. An inverter according to any one of the preceding Claims, in which the output inductor comprises a four-leg inductor and a three-phase inductor connected in series.

7. A wind farm with an inverter for producing an alternating or three-phase current according to any one of the preceding Claims.

## Revendications

1. Onduleur pour générer un courant alternatif ou triphasé à partir d'une tension continue, avec un circuit intermédiaire à tension continue et, du côté sortie, une bobine de self de sortie (L_{A}), se composant de m + 1 spires qui font l'objet d'un couplage magnétique entre elles et de flux magnétiques apparaissant dans la m + unième spire qui s'écoulent dans les m spires de la bobine de self de sortie, dans lequel l'onduleur injecte par l'intermédiaire de m lignes un courant alternatif (courant triphasé) dans un réseau public d'alimentation en courant, dans lequel les m lignes sont couplées entre elles du côté sortie par m circuits oscillants par l'intermédiaire d'un point neutre au moyen duquel des harmoniques sensiblement symétriques qui apparaissent du côté de la sortie de l'onduleur sont très largement compensées et alors qu'au moyen du point neutre, des harmoniques asymétriques qui apparaissent du côté de la sortie de l'onduleur sont ramenées au circuit intermédiaire à tension continue par l'intermédiaire de la m + unième spire (L₄) qui est reliée directement par l'intermédiaire d'une ligne avec le circuit intermédiaire à tension continue.

2. Onduleur selon l'une quelconque des revendications précédentes **caractérisé par** des moyens qui génèrent du côté sortie des harmoniques asymétriques.

3. Onduleur selon la revendication 2, **caractérisé en ce que** la bobine de self de sortie transmet des flux magnétiques asymétriques qui sont constitués à partir des harmoniques asymétriques.

4. Onduleur selon l'une quelconque des revendications précédentes, **caractérisé en ce que** la m + unième branche n'est traversée que par un courant d'harmonique.

5. Onduleur selon l'une quelconque des revendications précédentes, **caractérisé en ce que** la bobine de self de sortie est une bobine de self à courant compensé.

6. Onduleur selon l'une quelconque des revendications précédentes, **caractérisé en ce que** la bobine de self de sortie se compose d'une bobine de self à quatre branches et d'une de bobine de self triphasée commutée en série.

7. Eolienne avec un onduleur selon l'une quelconque des revendications précédentes pour générer un courant alternatif ou un courant triphasé.
